# EUROPÄISCHE PATENTSCHRIFT

(11) **EP 2 924 974 B1**
(45) Veröffentlichungstag und Bekanntmachung des Hinweises auf die Patenterteilung: **14.09.2016**
(21) Anmeldenummer: 15156492.9
(22) Anmeldetag: 25.02.2015
(51) Int. Cl.: H04N 5/225, H04N 17/00

(54) **Optoelektronische Vorrichtung und Verfahren zur Aufnahme von scharfen Bildern**
Opto-electronic device and method for capturing sharp images
Dispositif opto-électronique et procédé pour capturer des images nettes

(30) Priorität: 24.03.2014 DE 102014104029
(43) Veröffentlichungstag der Anmeldung: 30.09.2015
(73) Patentinhaber: SICK AG, 79183 Waldkirch (DE)
(72) Erfinder: Schneider, Florian, 79276 Reute (DE)
(74) Vertreter: Hehl, Ulrich

(56) Entgegenhaltungen:
- EP-A1- 2 071 367
- DE-A1-102012 104 579

## Beschreibung

Die Erfindung betrifft eine optoelektronische Vorrichtung und ein Verfahren zur Aufnahme von scharfen Bildern nach dem Oberbegriff von Anspruch 1 beziehungsweise 11.

In nahezu jedem optischen Sensor ist eine Sende- beziehungsweise Empfangsoptik vorgesehen. Häufig wird diese Optik mit Hilfe einer Fokusverstellung auf einen bestimmten Abstand oder Abstandsbereich scharf eingestellt, indem elektromechanisch oder optomechanisch die Position der Linsen und damit die Schnittweite der Sendeoder Empfangsoptik verstellt wird.

Solche Lösungen erfordern viel Bauraum und stellen zudem hohe Ansprüche an den mechanischen Aufbau zur präzisen Einstellbarkeit, damit eine vorgegebene Fokuslage auch tatsächlich angenommen wird. Eine Alternative ist der Einsatz von Optiken, bei denen nicht die Schnittweite, sondern unmittelbar die Form und damit die Brennweite der Linse selbst mittels einer Spannungsansteuerung variiert wird. Insbesondere werden dafür Gel- oder Flüssiglinsen genutzt. Bei einer Gellinse wird eine silikonartige Flüssigkeit mittels piezoelektrischer oder induktiver Aktoren mechanisch deformiert. Flüssiglinsen nutzen beispielsweise den sogenannten Elektrobenetzungseffekt (electrowetting) aus, indem zwei nicht mischbare Flüssigkeiten in einer Kammer übereinander angeordnet werden. Bei Anlegen einer Steuerspannung ändern die beiden Flüssigkeiten ihre Oberflächenspannung in unterschiedlicher Weise, so dass die innere Grenzfläche der Flüssigkeiten spannungsabhängig ihre Krümmung verändert. Ein optoelektronischer Sensor mit Fokusverstellung auf Basis von Flüssiglinsen ist aus der DE 10 2005 015 500 A1 oder der DE 20 2006 017 268 U1 bekannt.

Kamerasysteme mit variabler Fokuseinstellung können in zwei Kategorien eingeteilt werden. Autofokussysteme ermitteln auf Basis mehrerer Aufnahmen an unterschiedlichen Fokuspositionen iterativ die geeignete Fokusposition ("Closed-Loop"-Verfahren). Durch die erforderliche Iteration ist dieses Vorgehen relativ langsam. Eine zweite Möglichkeit der Fokussierung besteht darin, eine erforderliche Fokusposition aus einer Abstandsmessung zu bestimmen, wobei dann die Fokuseinheit den Vorgabewert umsetzt ("Open-Loop"-Verfahren). Es ist dann erforderlich dafür zu sorgen, dass die Fokuseinheit tatsächlich die gewünschte Fokuslage erreicht hat. Das ist besonders bei Flüssigoder Gellinsen mit thermischer Volumenausdehnung und temperaturabhängigen Brechungsindizes kritisch. Zu deren Ausgleich wird zwar eine temperaturabhängige Korrekturmatrix eingelernt. Damit kann die Ansteuerung der Fokuseinheit die aktuelle Temperatur berücksichtigen und einer Temperaturdrift entgegenwirken. Zu dem reversiblen Temperaturgang können allerdings noch weitere Effekte wie eine Alterung hinzukommen, die auch im Gegensatz zu einem Temperaturgang regelmäßig nicht vorhersagbar sind. Daraus ergibt sich eine nicht korrigierbare Drift und damit eine verbleibende Unschärfe.

In Weiterbildung von Flüssiglinsen zur Fokusverstellung schlägt die EP 2 071 367 A1 vor, auch die Verkippung der Flüssiglinse durch Anlegen unterschiedlicher Spannungen in Umlaufrichtung zu verändern. Um die Aufnahme verwackelter Bilder zu verhindern, wird dann die Eigenbewegung der Kamera ermittelt, und eine oder mehrere Linsen in der Kamera werden verkippt, um dieser Eigenbewegung entgegenzuwirken. An der geschilderten Problematik von Temperaturgang und Drift ändert die Möglichkeit des Verkippens jedoch nichts.

In der DE 10 2005 015 500 A1 wird ein weiterer optoelektronischer Sensor mit einer Flüssiglinse offenbart, die durch einen asymmetrischen Rahmen oder unterschiedliche elektrische Potentiale an separaten Elektroden des Linsenrahmens in ihren Strahlformungseigenschaften asymmetrisch veränderbar ist. Das Dokument erläutert dann aber nicht, wozu das genutzt werden kann.

Die DE 10 2012 104 579 A1 beschreibt eine Kamera mit einem Objektiv, dessen Fokusverstellelement eine Flüssiglinse aufweist, deren Fokuslage durch ein Steuersignal eingestellt wird. Um Drifterscheinungen entgegenzuwirken, werden Korrekturwerte für die Steuersignale berechnet. Dazu wird ein Referenzmuster abgebildet, und anhand dessen Schärfegrads wird ein Driftzustand des Objektivs ermittelt.

Es ist daher Aufgabe der Erfindung, die Fokussierung mit einer adaptiven Linse in einer gattungsgemäßen Vorrichtung zu verbessern.

Diese Aufgabe wird durch eine optoelektronische Vorrichtung nach Anspruch 1 sowie ein Verfahren zur Aufnahme von scharfen Bildern nach Anspruch 11 gelöst. Die Vorrichtung weist einen Bildsensor und eine adaptive Linse auf, die durch Verkippen in verschiedene Ausrichtungen gebracht werden kann. Die Erfindung geht nun von dem Grundgedanken aus, die adaptive Linse zu verkippen und mit dem Bildsensor zu beobachten, in welche Position ein bestimmtes Bildmerkmal aufgrund der Verkippung gelangt. Diese Position wird sich durch Driften verändern, also insbesondere Temperatur und Alterungserscheinungen. Somit kann aus der Position auf die Drift und damit eine erforderliche Driftkorrektur geschlossen werden.

In einer Ausführungsform gemäß Anspruch 1 ist die adaptive Linse in einer Empfangsoptik des Bildsensors vorgesehen. Ein Verkippen der adaptiven Linse verändert das Sichtfeld des Bildsensors und damit die Position eines bestimmten Bildmerkmals innerhalb einer Aufnahme des Bildsensors.

Das Bildmerkmal kann irgendeine wiedererkennbare Struktur der Szenerie sein. Bevorzugt weist die Vorrichtung einen Lichtsender auf, und die Auswertungseinheit verwendet einen Lichtfleck oder Teile eines Beleuchtungsmusters des Lichtsenders als Bildmerkmal. Damit ist die Vorrichtung nicht mehr auf das Vorhandensein solcher wiedererkennbaren Strukturen in der Szenerie angewiesen. Das aus der eigenen Beleuchtung gewonnene Bildmerkmal ist verlässlich und gut erkennbar. Beispielsweise handelt es sich bei dem Lichtsender um eine Kontrastmusterbeleuchtung oder eine Zielvorrichtung, etwa zum Anzeigen eines Aufnahmefeldes einer Kamera oder eines Lesefeldes eines Codelesers im Objektbereich. Ein solcher Lichtsender ist aufgrund seiner eigenen Funktion und nicht eigens für die erfindungsgemäße Driftkorrektur vorgesehen.

In einer alternativen Ausführungsform gemäß Anspruch 3 ist die adaptive Linse in einer Sendeoptik eines Lichtsenders vorgesehen. Wird hier die adaptive Linse verkippt, so verschiebt sich die Position des von dem Lichtsender erzeugten Beleuchtungsmusters oder Lichtflecks in einer Aufnahme des Bildsensors. Die Fokussierung des Lichtsenders ist beispielsweise für ein Kontrastmuster, ein Zielmuster zum Bezeichnen eines bestimmten Aufnahme- oder Lesebereichs oder für die Erzeugung eines scharfen Lichtflecks nützlich. Es sind auch Mischformen der Ausführungsformen nach Anspruch 1 und 3 denkbar, in denen Lichtempfänger und Lichtsender fokussiert werden, sei es durch eine gemeinsame adaptive Linse oder je eine adaptive Linse.

Die Erfindung hat sowohl beim empfangsseitigen Einsatz der adaptiven Linse nach Anspruch 1 wie auch beim sendeseitigen Einsatz nach Anspruch 3 den Vorteil, dass eine rasche und genaue Fokuseinstellung ermöglicht wird. Das gelingt erfindungsgemäß sogar in einem Open-Loop-Verfahren, denn es können während des Betriebs Temperaturgang und Alterungseffekte der adaptiven Linse und damit der Empfangsoder Sendeoptik bestimmt und bei Bedarf kompensiert werden. Ein Closed-Loop-Verfahren würde diese Drifteffekte auch berücksichtigen, da es auf die tatsächliche Fokusstellung abstellt, ist aber durch die Iteration vergleichsweise langsam.

Die Auswertungseinheit ist bevorzugt dafür ausgebildet, in einer Aufnahme des Bildsensors bei Ansteuerung eines zweiten Kippwinkels der adaptiven Linse eine zweite Position des Bildmerkmals und die Driftkorrektur aus der ersten Position und der zweiten Position zu bestimmen. In dieser Ausführungsform liegen somit der Driftkorrektur zwei Kippwinkel und zwei dabei bestimmte Positionen des Bildmerkmals zugrunde. Weitere Wechsel des Kippwinkels mit Bestimmung der jeweiligen Position des Bildmerkmals sind denkbar. Umgekehrt wäre auch denkbar, bei einem Kippwinkel die Position von mehr als einem Bildmerkmal zu bestimmen. Das führt zu einer verbreiterten Datenbasis, aus der die Driftkorrektur bestimmt wird. In den jeweiligen Kippwinkeln kann eine eigene Aufnahme ausgelöst werden. Alternativ wird während des Verkippens belichtet, so dass das Bildmerkmal verwaschen wird und eine Linie von der ersten Position zu der zweiten Position bildet.

Vorzugsweise ist in einem Speicherelement mindestens eine Referenzposition abgelegt, und die Auswertungseinheit bestimmt die Driftkorrektur anhand von Abweichungen der ersten Position und/oder der zweiten Position von einer Referenzposition. Hier wird also durch anfängliches Einlernen oder eine andere Vorgabe anfänglich bestimmt, wo das Bildmerkmal in den jeweiligen Kippwinkeln ohne Driften erwartet würde. Abweichungen von dieser Referenzposition sind dann ein Maß für die Driften.

Die Auswertungseinheit ist bevorzugt für eine Regelung ausgebildet, welche die Ansteuerungen von Kippwinkeln anhand der Driftkorrektur so regelt, dass die Driften kompensiert sind. Obwohl es schon vorteilhaft sein kann, eine Drift zu erkennen und beispielsweise daraufhin eine Wartungsaufforderung auszugeben, ist das eigentliche Ziel, die Drift zu kompensieren. Die Driftkorrektur ermöglicht dies, nämlich die Ansteuerungssignale an die adaptive Linse so anzupassen, dass die Driften nicht mehr auftreten beziehungsweise ausgeglichen sind. Das lässt sich auch überprüfen, indem die entsprechend ausgeregelte Verkippung angesteuert wird, woraufhin die Position des Bildmerkmals derjenigen ohne Drift entspricht. Dies kann vorab zur Verifizierung des Vorgehens der Regelung und sogar im Betrieb zum Sicherstellen der korrekten Arbeitsweise der Driftkompensation geprüft werden.

Die Auswertungseinheit ist bevorzugt dafür ausgebildet, einen Fokusabstand der adaptiven Linse einzustellen, wobei Steuersignale zum Einstellen eines Fokusabstands anhand der Driftkorrektur korrigiert werden. Häufig ist die Aufgabe der adaptiven Linse nicht das Einstellen eines Kippwinkels, sondern die Fokussierung, oder zumindest soll neben dem Kippwinkel auch die Fokussierung eingestellt werden. Hierzu wird bei einem Open-Loop-Verfahren eine Fokustabelle abgelegt, welche die erforderlichen Steuerungssignale für einen bestimmten einzustellenden Fokusabstand enthält. Zum Ausgleich von Driften werden diese Steuerungssignale im Betrieb aufgrund der Driftkorrektur angepasst. Dabei wird angenommen, dass eine Driftkompensation, welche Abweichungen der Positionen der Bildmerkmale nach einer Verkippung kompensieren, im gleichen Maße auch die Fokuseinstellung kompensiert, da die adaptive Linse für Verkippung und Fokussierung das gleiche physikalische Wirkprinzip nutzt, das somit auch gleichen Driften unterliegt.

Die adaptive Linse ist bevorzugt eine Flüssiglinse oder eine Gellinse. Solche Linsen bieten die gewünschten Einstellmöglichkeiten und sind dabei sehr bauklein und kostengünstig. Das Verkippen einer solchen Linse bedeutet natürlich nicht zwingend ein geometrisches Verkippen, sondern bezieht sich auf die optische Wirkung, die effektiv einer Verkippung entspricht.

Die adaptive Linse weist bevorzugt in Umlaufrichtung segmentierte Ansteuerelemente auf. Bei den Ansteuerelementen handelt es sich beispielsweise um segmentierte Elektroden, die eine Flüssiglinse über den Elektrobenetzungseffekt steuern. Denkbar sind weiterhin segmentierte Aktoren, insbesondere Piezoaktoren, die den Druck auf eine Flüssigkeit lokal verändern und dadurch eine Membran auf Flüssigkeit unterschiedlich krümmen, oder die direkt eine gelartige Substanz der Linse verformen. Durch die Segmentierung in Umlaufrichtung wird eine nicht rotationssymmetrische Beeinflussung der Linse ermöglicht, die zu der optischen Verkippung führt.

Die Auswertungseinheit ist bevorzugt zum Auslesen von Codeinformationen aus den Objektinformationen ausgebildet. Die Vorrichtung wird damit zu einem Codeleser.

Die Auswertungseinheit ist bevorzugt dafür ausgebildet, eine Serie von Aufnahmen des Überwachungsbereichs zu erzeugen und dabei für eine Driftkorrektur mindestens einmal den ersten Kippwinkel anzusteuern. Eine derartige Vorrichtung nimmt also eine Bildserie auf, beispielsweise bei Montage an einem Förderband zum Inspizieren oder Vermessen der darauf geförderten Objekte oder zum Auslesen von an diesen Objekten angebrachten optischen Codes. Die Bilder sollen jeweils scharf fokussiert aufgenommen werden. Dazu ist denkbar, zusätzliche Aufnahmen mit verkippter adaptiver Linse zum Auffinden der Fokuseinstellung einzuschieben. Die zusätzlichen Aufnahmen können auch mit Bildverarbeitungsprogrammen in die Perspektive ohne Verkippen zurückgerechnet werden. Bei kleinen Kippwinkeln ist das in sehr guter Näherung lediglich eine Verschiebung des Bildausschnitts. Auf diese Weise müssen nicht Aufnahmen allein zum Auffinden der Fokuslage verlorengehen. Die hier angesprochenen Driften sind relativ langsame Prozesse, so dass die Berechnung der Driftkorrektur auch lediglich in längeren Intervallen statt für jedes zu verwendende Bild erfolgen kann.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1a: eine schematische Schnittdarstellung eines optoelektronischen Sensors mit einer verkippbaren adaptiven Linse in der Empfangsoptik;
- Fig. 1b: eine sehr vereinfachte Darstellung der Aufnahme eines Bildmerkmals mit dem Sensor nach Figur 1 a in zwei Kippstellungen der adaptiven Linse;
- Fig. 2a: eine schematische Schnittdarstellung eines optoelektronischen Sensors mit einer verkippbaren adaptiven Linse in der Sendeoptik;
- Fig. 2b: eine sehr vereinfachte Darstellung der Aufnahme eines Bildmerkmals mit dem Sensor nach Figur 2a in zwei Kippstellungen der adaptiven Linse;
- Fig. 3a: eine Darstellung einer adaptiven Linse in einer strahlaufweitenden Einstellung;
- Fig. 3b: eine Darstellung der adaptiven Linse in einer neutralen Einstellung;
- Fig. 3c: eine Darstellung der adaptiven Linse in einer strahlbündelnden Einstellung;
- Fig. 4a: eine Darstellung der adaptiven Linse mit Verkippen nach unten;
- Fig. 4b: eine Darstellung der adaptiven Linse ohne Verkippen;
- Fig. 4c: eine Darstellung der adaptiven Linse mit Verkippen nach oben; und
- Fig. 5: eine Draufsicht auf die adaptive Linse zur Illustration einer segmentierten, nicht rotationssymmetrischen Ansteuerung.

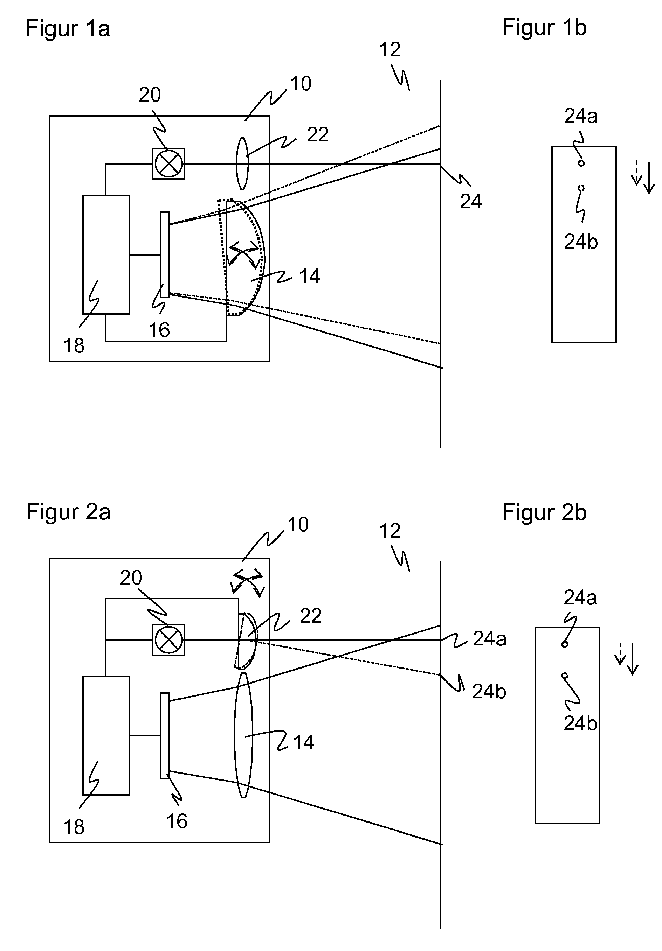

Figur 1 zeigt eine schematische Schnittdarstellung einer Ausführungsform einer optoelektronischen Vorrichtung 10 zur Erfassung von Objektinformationen aus einem Überwachungsbereich 12. Über eine Empfangsoptik 14 erzeugt ein Bildsensor 16, beispielsweise ein CCD- oder CMOS-Chip, Aufnahmen des Überwachungsbereichs 12. Die Bilddaten dieser Aufnahmen werden an eine Auswertungseinheit 18 weitergegeben.

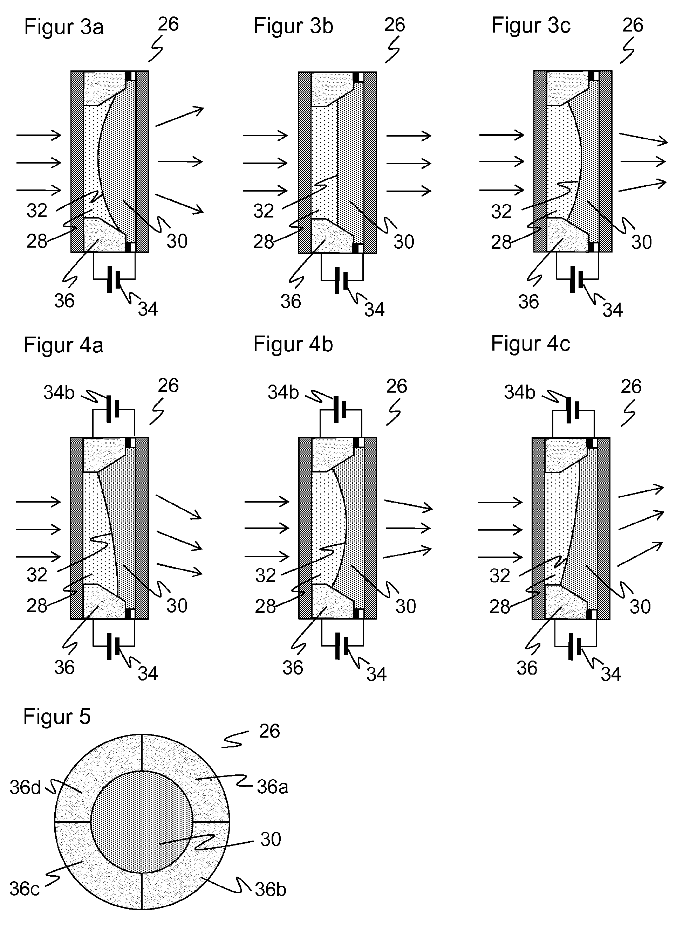

Die Empfangsoptik 16 weist eine adaptive Linse auf, die durch elektronische Ansteuerung der Auswertungseinheit 18 verkippt werden kann. Das Funktionsprinzip der adaptiven Linse wird weiter unten anhand der Figuren 3 bis 5 näher erläutert. Zusätzlich zu der adaptiven Linse können beispielsweise ein Festbrennweitenobjektiv mit Vorderseitenapertur, dem die adaptive Linse vorgeordnet ist, oder allgemein weitere optische Elemente wie Blenden oder Linsen vorgesehen sein. Durch die Verkippung der adaptiven Linse ergibt sich eine Variation des Sichtfeldes der Vorrichtung 10, also eine Rotation und/oder Verschiebung.

Diese Variation des Sichtfeldes wird erfindungsgemäß genutzt, um Drifteffekte der adaptiven Linse zu messen und gegebenenfalls zu kompensieren. Die Vorrichtung 10 weist noch einen Lichtsender 20 mit einer Sendeoptik 22 auf. Dadurch wird in dem Überwachungsbereich ein gut wiedererkennbares Bildmerkmal 24 erzeugt, sei es ein begrenzter Lichtfleck eines kollimierten Sendelichtstrahls oder der Teil eines von dem Lichtsender 20 erzeugten Kontrastmusters. In einer bevorzugten Ausführungsform handelt es sich bei dem Lichtsender 20 um eine Zielvorrichtung beziehungsweise einen Ziellaser, der zur Visualisierung eines Aufnahme- oder Lesebereichs eingesetzt wird. In einer nicht dargestellten Ausführungsform ohne den Lichtsender 20 kann ein Strukturmerkmal der Szenerie als Bildmerkmal 24 verwendet werden.

Das Bildmerkmal 24 wird von der Auswertungseinheit 18 in einer unter Verkippen der adaptiven Linse erzeugten Bildaufnahme lokalisiert, um Drifteffekte zu messen. Dies wird in Figur 1b illustriert. Dort ist mit durchgezogener Linie das Bildmerkmal 24a in einer ersten Kippstellung und mit gestrichelter Linie das zeitversetzt aufgenommene Bildmerkmal 24b in einer zweiten Kippstellung dargestellt. Wie mit durchgezogenem Pfeil daneben illustriert, ergibt sich aufgrund der Verkippung ein Versatz der beiden Positionen, an denen die Bildmerkmale 24a-b aufgenommen werden. Dieser Versatz wird durch die tatsächliche Verkippung verursacht und enthält einen durch einen gestrichelten Pfeil illustrierten erwarteten Anteil der angesteuerten Verkippung, der in der Auswertungseinheit 18 oder einem anderen Speicherelement beispielsweise durch Einlernen gespeichert ist, und eine zusätzliche Driftkomponente, die Abweichungen zwischen angesteuerter und tatsächlicher Verkippung aufgrund von Temperatur- oder Alterungseffekten geschuldet ist. Damit kann die Drift gemessen werden. Der Abstand zwischen Lichtsender 20 und Bildsensor 16 sollte möglichst gering sein, da die Verschiebung des Bildmerkmals 24 eine Abhängigkeit von diesem Abstand zeigt, welche die gemessene Drift verfälscht oder kompliziertere Rechnungen erforderlich macht.

In einer einfachen Ausführungsform wird die Drift lediglich bestimmt und beispielsweise das Überschreiten einer Toleranz angezeigt. Vorzugsweise findet jedoch eine Driftkompensation statt. Dazu bestimmt eine Regelung diejenigen Ansteuerungen der adaptiven Linse, welche die angesteuerte und tatsächliche Verkippung wieder in Übereinstimmung bringen, also in der Illustration nach Figur 1b dafür sorgen, dass der durchgezogene und der gestrichelte Pfeil gleich lang werden.

Alternativ zu einer zeitversetzten Bildaufnahme kann während des Verkippens belichtet werden, so dass das Bildmerkmal 24 statt an zwei separaten Positionen verwaschen als Linie zwischen den beiden Positionen aufgenommen wird. Die Linie ist möglicherweise leichter erkennbar, und die Linienlänge ist dann das Maß für die Verschiebung einschließlich der Drift.

Es gibt einen temperaturunabhängigen Zusammenhang zwischen der Kippposition und der Brennweite der adaptiven Linse, da beide Verstellmöglichkeiten auf demselben physikalischen Funktionsprinzip basieren. Mit anderen Worten kann eine Drift der Brennweitenverstellung wie beschrieben als Drift der Kippverstellung gemessen werden. Diejenige Driftkompensation, welche die Kippverstellung korrigiert, führt auch zu einer Driftkompensation der Brennweitenverstellung. Häufig ist die rasche und zuverlässige Fokuseinstellung das Ziel der Driftkompensation, welche erfindungsgemäß indirekt über die Verschiebung von Bildmerkmalen 24 bei Verkippen der adaptiven Linse bestimmt wird.

Wird die Vorrichtung 10 eingesetzt, um ganze Bildfolgen aufzunehmen, beispielsweise zur Inspektion oder Vermessung von Objekten an einer Förderanlage, oder zum Lesen von optischen Codes auf geförderten Objekten, so kann die Drift synchron zur regulären Bildaufnahme ermittelt werden. Dazu werden abwechselnd Bilderaufnahmen bei unterschiedlichen Kipppositionen vorgenommen und, soweit erforderlich, die Auswirkungen des Verkippens anschließend von der Auswertungseinheit 18 durch nachträgliche Bildverarbeitung kompensiert. Wirkt sich die Beleuchtung des Lichtsenders 20 derart nachteilig auf die Aufnahmen aus, dass deren Qualität nicht mehr ausreicht, so ist auch denkbar, den Lichtsender 20 während der regulären Bildaufnahmen zu deaktivieren und Zwischenaufnahmen der von dem Lichtsender 20 erzeugten Bildmerkmale 24 bei Verkippung der adaptiven Linse zwischen reguläre Bildaufnahmen einzuschieben. Dabei muss die Abfolge nicht streng alternierend sein, es können sowohl mehrere reguläre Aufnahmen als auch mehrere Aufnahmen bei verkippter adaptiver Linse und aktiviertem Lichtsender 20 aufeinanderfolgen. Um die Zwischenaufnahmen zu beschleunigen, können auch lediglich Bildausschnitte davon eingelesen werden, da die möglichen Positionen der Bildmerkmale 24 beschränkt sind.

Figur 2 zeigt eine weitere Ausführungsform der optoelektronischen Vorrichtung 10. Diese Ausführungsform unterscheidet sich von der in Figur 1 gezeigten Ausführungsform dadurch, dass hier die adaptive Linse Teil der Sendeoptik 22 statt der Empfangsoptik 14 ist. Es wird also nicht die Bildaufnahme des Bildsensors 16, sondern die Beleuchtung des Lichtsenders 20 fokussiert, beispielsweise um ein scharfes Kontrastmuster, ein scharfes Zielmuster zum Kenntlichmachen eines Aufnahme- oder Lesebereichs oder einen scharfen Lichtfleck in einem bestimmten Abstand zu projizieren. Durch Verkippen der adaptiven Linse entsteht das Bildmerkmal 24a-b nicht nur scheinbar innerhalb der aufgenommenen Bilddaten, sondern tatsächlich im Objektbereich an verschiedenen Positionen. Die erfindungsgemäße Driftkorrektur erfolgt aber in völlig gleicher Weise wie zu Figur 1 beschrieben. Anstelle der in Figur 2 dargestellten fixen Empfangsoptik 14 ist eine Empfangsoptik 14 denkbar, die ebenfalls eine adaptive Linse aufweist, insbesondere mit etwas variierter Anordnung von Sende- und Empfangspfad beispielsweise durch Autokollimation dieselbe adaptive Linse wie die Sendeoptik 22.

Die Figuren 1 und 2 sind Prinzipdarstellungen, die stellvertretend für eine Vielzahl von Sensoren stehen. Für die Erfindung wesentlich sind nur die adaptive Linse in Empfangsoptik 14 und/oder Sendeoptik 22 sowie die darauf basierende Driftbestimmung. Es ergeben sich damit vielfältige Anwendungen für die Inspektion und Vermessung von Objekten. Durch den Einsatz an sich bekannter Signal- oder Bildverarbeitungen zum Lesen von Codes entsteht ein Barcodescanner oder ein kamerabasierter Codeleser.

Die Figuren 3 und 4 zeigen die adaptive Linse der Empfangsoptik 14 beziehungsweise der Sendeoptik 22 in einer beispielhaften Ausführungsform als Flüssiglinse 26 nach dem Elektrobenetzungseffekt. Die Funktionsweise wird anhand dieser Flüssiglinse 26 erläutert, aber die Erfindung umfasst auch andere adaptive Linsen, beispielsweise solche mit einer Flüssigkeitskammer und einer diese bedeckenden Membran, deren Wölbung durch Druck auf die Flüssigkeit verändert wird, oder Linsen mit einem gelartigen optisch durchlässigen Material, dass durch eine Aktorik mechanisch verformt wird.

Die aktiv durchstimmbare Flüssiglinse 26 weist zwei transparente, nicht mischbare Flüssigkeiten 28, 30 mit unterschiedlichen Brechungsindizes und gleicher Dichte auf. Die Form der Flüssigkeits-Flüssigkeitsgrenzschicht 32 zwischen den beiden Flüssigkeiten 28, 30 wird zur optischen Funktion verwendet. Die Aktuierung basiert auf dem Prinzip der Elektrobenetzung, welche eine Abhängigkeit der Oberflächen- oder Grenzflächenspannung vom angelegten elektrischen Feld zeigt. Deshalb ist es möglich, die Form der Grenzschicht 32 und damit die optischen Eigenschaften der Flüssiglinse 26 durch elektrische Ansteuerung an einem Anschluss 34 zu verändern, wodurch entsprechende Spannungen an einer Elektrode 36 anliegen.

Figur 3 zeigt zunächst die länger bekannte Veränderung der Fokuseigenschaften der Flüssiglinse 26. In Figur 3a wird einfallendes Licht an einer konkaven Grenzschicht 32 aufgestreut. Figur 3b zeigt eine neutrale Einstellung mit flacher Grenzschicht 32, während in Figur 3c die Grenzschicht konvex ist und damit das einfallende Licht bündelt. Es ist klar, dass durch entsprechende Zwischeneinstellungen das Brechungsverhalten feiner abgestuft und beispielsweise eine Brennweite eingestellt werden kann.

Die Flüssiglinse 26 kann aber auch in ihrer Verkippung beeinflusst werden. Dies wird in Figur 4 illustriert und beruht auf nicht rotationssymmetrisch angelegten Spannungen und damit elektrischen Feldern. Dementsprechend wird die Grenzschicht 32 nicht rotationssymmetrisch verformt, was für die Verkippung ausgenutzt wird. Figur 4a zeigt eine Verkippung der Flüssiglinse 26 nach unten, Figur 4b eine rotationssymmetrische Einstellung ohne Verkippung zum Vergleich, und Figur 4c eine Verkippung der Flüssiglinse 26 nach oben. Dabei bezieht sich die Richtung der Verkippung jeweils auf die optische Wirkung, also aus welcher Richtung Licht empfangen wird beziehungsweise in welche Richtung Sendelicht ausgesandt wird. Der Verkippung kann jeweils eine Fokussierung überlagert sein.

Figur 5 zeigt eine Draufsicht auf die Flüssiglinse 26, um nochmals die nicht rotationssymmetrische Ansteuerung zu erläutern. Dazu wird nämlich die Elektrode 36 segmentiert. Zur Ansteuerung der hier beispielhaft vier Segmente 36a-d kann mindestens ein in Figur 4 gezeigter zusätzlicher Anschluss 34b erforderlich werden. Durch Anlegen unterschiedlicher Spannungen an die Segmente 36a-d wird die Grenzschicht 32 in einer nicht rotationssymmetrischen Weise verformt, und deshalb kann neben der Brennweite auch eine Verkippung der Linsenform eingestellt werden.

## Patentansprüche

1. Optoelektronische Vorrichtung (10) zur Erfassung von Objektinformationen aus einem Überwachungsbereich (12) mit einem Bildsensor (16), einer dem Bildsensor (16) zugeordneten Empfangsoptik (14), die eine adaptive Linse (26) mit variabler Verkippung aufweist, und einer Auswertungseinheit (18) zum Erzeugen der Objektinformationen aus einem Empfangssignal des Bildsensors (16), **dadurch gekennzeichnet,**
**dass** in einem Speicherelement (18) der Vorrichtung (10) mindestens eine Referenzposition eines Bildmerkmals (24) abgelegt ist, wobei die Referenzposition angibt, wo das Bildmerkmal (24) in einem ersten Kippwinkel der adaptiven Linse (26) ohne Driften erwartet wird, und dass die Auswertungseinheit (18) dafür ausgebildet ist, in einer Aufnahme des Bildsensors (16) bei Ansteuerung des ersten Kippwinkels eine erste Position des Bildmerkmals (24) und aus der ersten Position anhand von Abweichungen der ersten Position von der Referenzposition eine Driftkorrektur für die adaptive Linse (26) vorzunehmen, indem eine Regelung eine angesteuerte und tatsächliche Verkippung der adaptiven Linse (26) in Übereinstimmung bringt, wobei angenommen wird, dass eine Driftkompensation, welche die Kippverstellung korrigiert, in gleichem Maße auch die Fokuseinstellung kompensiert.

2. Optoelektronische Vorrichtung (10) nach Anspruch 1,
die einen Lichtsender (20) aufweist, und wobei die Auswertungseinheit (18) einen Lichtfleck oder Teile eines Beleuchtungsmusters des Lichtsenders (20) als Bildmerkmal (24) verwendet.

3. Optoelektronische Vorrichtung (10) nach einem der vorhergehenden Ansprüche,
wobei die Auswertungseinheit (18) dafür ausgebildet ist, in einer Aufnahme des Bildsensors (16) bei Ansteuerung eines zweiten Kippwinkels der adaptiven Linse (26) eine zweite Position des Bildmerkmals (24) und die Driftkorrektur aus der ersten Position und der zweiten Position zu bestimmen.

4. Optoelektronische Vorrichtung (10) nach einem der vorhergehenden Ansprüche,
wobei in dem Speicherelement (18) eine zweite Referenzposition abgelegt ist und die Auswertungseinheit (18) die Driftkorrektur auch anhand von Abweichungen der zweiten Position von der zweiten Referenzposition bestimmt.

5. Optoelektronische Vorrichtung (10) nach einem der vorhergehenden Ansprüche,
wobei die Auswertungseinheit (18) für eine Regelung ausgebildet ist, welche die Ansteuerungen von Kippwinkeln anhand der Driftkorrektur so regelt, dass die Driften kompensiert sind.

6. Optoelektronische Vorrichtung (10) nach einem der vorhergehenden Ansprüche,
wobei die Auswertungseinheit (18) dafür ausgebildet ist, einen Fokusabstand der adaptiven Linse (26) einzustellen, und wobei Steuersignale zum Einstellen eines Fokusabstands anhand der Driftkorrektur korrigiert werden.

7. Optoelektronische Vorrichtung (10) nach einem der vorhergehenden Ansprüche,
wobei die adaptive Linse (26) eine Flüssiglinse oder eine Gellinse ist.

8. Optoelektronische Vorrichtung (10) nach einem der vorhergehenden Ansprüche,
wobei die adaptive Linse (26) in Umlaufrichtung segmentierte Ansteuerelemente (36a-d) aufweist.

9. Optoelektronische Vorrichtung (10) nach einem der vorhergehenden Ansprüche,
wobei die Auswertungseinheit (18) zum Auslesen von Codeinformationen aus den Objektinformationen ausgebildet ist.

10. Optoelektronische Vorrichtung (10) nach einem der vorhergehenden Ansprüche,
wobei die Auswertungseinheit (18) dafür ausgebildet ist, eine Serie von Aufnahmen des Überwachungsbereichs (12) zu erzeugen und dabei für eine Driftkorrektur mindestens einmal den ersten Kippwinkel anzusteuern.

11. Verfahren zum Aufnehmen von scharfen Bildern, bei dem eine adaptive Linse (26) einer Empfangsoptik (14) fokussiert und verkippt wird,
**dadurch gekennzeichnet,**
**dass** in einer Aufnahme bei Ansteuerung eines ersten Kippwinkels der adaptiven Linse (26) eine erste Position eines Bildmerkmals (24) und aus der ersten Position anhand von Abweichungen der ersten Position von einer zuvor gespeicherten Referenzposition des Bildmerkmals (24) eine Driftkorrektur für die adaptive Linse (26) vorzunehmen, indem eine Regelung eine angesteuerte und tatsächliche Verkippung der adaptiven Linse (26) in Übereinstimmung bringt, wobei diese Driftkorrektur in gleichem Maße eine Drift der Fokuseinstellung der Empfangsoptik (14) korrigiert, wobei die Referenzposition angibt, wo das Bildmerkmal (24) in dem ersten Kippwinkel ohne Driften erwartet wird.

## Claims

1. An optoelectronic apparatus (10) for the detection of object information from a monitoring area (12), the apparatus (10) comprising an image sensor (16), a receiving optics (14) associated with the image sensor (16), the receiving optics (14) having an adaptive lens (26) with variable tilt, and an evaluation unit (18) for generating the object information from a reception signal of the image sensor (16), **characterized in that** at least one reference position of an image feature (24) is stored in a memory element (18) of the apparatus (10), wherein the reference position includes an information as to where the image feature (24) is expected in a first tilt angle of the adaptive lens (26) without drifts, and **in that** the evaluation unit (18) is configured to determine a first position of the image feature (24) in an image of the image sensor (16) while setting the first tilt angle and to determine a drift correction for the adaptive lens (26) from the first position based on deviations of the first position from the reference position **in that** a feedback control matches a set and an actual tilt of the adaptive lens (26), wherein it is assumed that a drift compensation for correcting the tilt position also compensated the focal position to a similar degree.

2. The optoelectronic apparatus (10) in accordance with claim 1,
which has a light transmitter (20), and wherein the evaluation unit (18) uses a light spot or parts of an illumination pattern of the light transmitter (20) as an image feature (24).

3. The optoelectronic apparatus (10) in accordance with any of the preceding claims, wherein the evaluation unit (18) is configured to determine a second position of the image feature (24) in an image of the image sensor (16) while setting a second tilt angle of the adaptive lens (26), and to determine the drift correction from the first position and the second position.

4. The optoelectronic apparatus (10) in accordance with any of the preceding claims, wherein a second reference position is stored in the memory element (18) and the evaluation unit (18) determines the drift correction also by means of deviations of the second position from the second reference position.

5. The optoelectronic apparatus (10) in accordance with any of the preceding claims, wherein the evaluation unit (18) is configured for a feedback control which controls the setting of tilt angles based on the drift correction so that the drifts are compensated.

6. The optoelectronic apparatus (10) in accordance with any of the preceding claims, wherein the evaluation unit (18) is configured to set a focal distance of the adaptive lens (26), and wherein control signals for setting a focal distance are corrected by means of the drift correction.

7. The optoelectronic apparatus (10) in accordance with any of the preceding claims, wherein the adaptive lens (26) is a liquid lens or a gel lens.

8. The optoelectronic apparatus (10) in accordance with any of the preceding claims, wherein the adaptive lens (26) has segmented control elements (36a-d) in the circumferential direction.

9. The optoelectronic apparatus (10) in accordance with any of the preceding claims, wherein the evaluation unit (18) is configured for the reading of code information from the object information.

10. The optoelectronic apparatus (10) in accordance with any of the preceding claims, wherein the evaluation unit (18) is configured to generate a series of images of the monitoring area (12) and to set the first tilt angle along the way at least once for a drift correction.

11. A method for the recording of focused images in which an adaptive lens (26) of a receiving optics (14) is focused and tilted,
**characterized in that** a first position of an image feature (24) is determined in an image while setting a first tilt angle of the adaptive lens (26) and a drift correction for the adaptive lens (26) is made from the first position based on deviations of the first position from a reference position of the image feature (24) previously stored in that a feedback control matches a set and an actual tilt of the adaptive lens (26), wherein the drift correction also corrects the focal position of the receiving optics (14) to a similar degree, wherein the reference position includes an information as to where the image feature (24) is expected in the first tilt angle without drifts.

## Revendications

1. Dispositif optoélectronique (10), pour détecter des informations d'objets provenant d'une zone de surveillance (12), comportant un capteur d'image (16), une optique de réception (14) associée au capteur d'image (16), laquelle présente une lentille (26) adaptative avec un basculement variable, et une unité d'évaluation (18) pour engendrer des informations d'objets à partir d'un signal de réception du capteur d'image (16),
**caractérisé en ce que**
dans un élément de mémorisation (18) du dispositif (10) est déposée au moins une position de référence d'une caractéristique d'image (24), la position de référence indiquant où la caractéristique d'image (24) est attendue dans un premier angle de basculement de la lentille (26) adaptative sans dérive, et **en ce que** l'unité d'évaluation (18) est réalisée pour effectuer, dans une prise de vue du capteur d'image (16) lors du pilotage du premier angle de basculement, une première position de la caractéristique d'image (24) et, à partir de la première position, à l'aide de divergences de la première position par rapport à la position de référence, une correction de dérive pour la lentille (26) adaptative, par le fait qu'un réglage accorde un basculement piloté et un basculement réel de la lentille (26) adaptative, en supposant qu'une compensation de dérive qui corrige un réglage de basculement compense dans la même mesure une mise au point.

2. Dispositif optoélectronique (10) selon la revendication 1,
qui présente un émetteur de lumière (20), et dans lequel l'unité d'évaluation (18) utilise une tache lumineuse ou des parties d'un motif d'éclairage de l'émetteur de lumière (20) en tant que caractéristique d'image (24).

3. Dispositif optoélectronique (10) selon l'une des revendications précédentes,
dans lequel l'unité d'évaluation (18) est réalisée pour déterminer, dans une prise de vue du capteur d'images (16) lors du pilotage d'un deuxième angle de basculement de la lentille (26) adaptative, une deuxième position de la caractéristique d'image (24) et la correction de dérive depuis la première position et la deuxième position.

4. Dispositif optoélectronique (10) selon l'une des revendications précédentes,
dans lequel une deuxième position de référence est déposée dans l'élément de mémorisation (18), et l'unité d'évaluation (18) détermine la correction de dérive également à l'aide de divergences de la deuxième position par rapport à la deuxième position de référence.

5. Dispositif optoélectronique (10) selon l'une des revendications précédentes,
dans lequel l'unité d'évaluation (18) est réalisée pour un réglage qui règle les pilotages d'angles de basculement à l'aide de la correction de dérive de telle sorte que les dérives sont compensées.

6. Dispositif optoélectronique (10) selon l'une des revendications précédentes,
dans lequel l'unité d'évaluation (18) est réalisée pour régler une distance focale de la lentille (26) adaptative, et dans lequel des signaux de commande pour régler une distance focale sont corrigés à l'aide de la correction de dérive.

7. Dispositif optoélectronique (10) selon l'une des revendications précédentes,
dans lequel la lentille (26) adaptative est une lentille à liquide ou une lentille à gel.

8. Dispositif optoélectronique (10) selon l'une des revendications précédentes,
dans lequel la lentille (26) adaptative présente en direction périphérique des éléments de pilotage (36a-d) segmentés.

9. Dispositif optoélectronique (10) selon l'une des revendications précédentes,
dans lequel l'unité d'évaluation (18) est réalisée pour lire des informations de code depuis les informations d'objets.

10. Dispositif optoélectronique (10) selon l'une des revendications précédentes,
dans lequel l'unité d'évaluation (18) est réalisée pour engendrer une série de prises de vues de la zone de surveillance (12) et pour piloter en ce faisant au moins une fois le premier angle de basculement pour une correction de dérive.

11. Procédé de prise de vue d'images nettes, dans lequel une lentille (26) adaptative d'une optique de réception (14) est focalisée et basculée,
**caractérisé en ce que**
dans une prise de vue lors du pilotage d'un premier angle de basculement de la lentille (26) adaptative, une première position d'une caractéristique d'image (24) est déterminée, et à partir de la première position, à l'aide de divergences de la première position par rapport à une position de référence de la caractéristique d'image (24) auparavant mémorisée, une correction de dérive pour la lentille (26) adaptative est effectuée par le fait qu'un réglage accorde un basculement piloté et un basculement réel de la lentille (26) adaptative, cette correction de dérive corrigeant dans la même mesure une dérive du réglage de la focalisation de l'optique de réception (14), la position de référence indiquant où la caractéristique d'image (24) est attendue sans dérive dans le premier angle de basculement.
